# EUROPÄISCHE PATENTANMELDUNG

(11) **EP 0 633 286 A1**
(43) Veröffentlichungstag der Anmeldung: **11.01.1995**
(21) Anmeldenummer: 94810386.6
(22) Anmeldetag: 30.06.1994
(51) Int. Cl.: C08K 3/00, C08L 63/00

(54) **Härtbare, Füllstoffe enthaltende Epoxidharzzusammensetzung**

(30) Priorität: 09.07.1993 CH 2066/93
(71) Anmelder: CIBA-GEIGY AG, CH-4002 Basel (CH)
(72) Erfinder: Awe, Jens, Dr., D-79576 Weil am Rhein (DE); Beer, Helmut, D-64385 Reichelsheim (DE); Endlich, Wilhelm, D-64646 Heppenheim (DE)

(57) **Zusammenfassung**

Härtbare Epoxidharzzusammensetzungen, die
(a) ein Epoxidharz mit durchschnittlich mehr als einer Epoxidgruppe im Molekül,
(b) ein Epoxidharzhärtungsmittel in für die Aushärtung des Epoxidharzes ausreichender Menge,
(c) Wollastonit mit einer mittleren Korngrösse von kleiner als 100 µm in einer Menge von 10 bis 350 Gewichtsteilen, bezogen auf 100 Gewichtsteile der Summe aus den Komponenten (a) und (b),
(d) ein Quarz/Kaolinit-Gemisch mit einer mittleren Korngrösse von kleiner als 100 µm in einer Menge von 10 bis 350 Gewichtsteilen, bezogen auf 100 Gewichtsteile der Summe aus den Komponenten (a) und (b), wobei der Anteil an den Komponenten (c) und (d) zusammen nicht grösser als 360 Gewichtsteilen ist, und gegebenenfalls
(e) übliche Zusatzmittel enthalten, eignen sich zur Herstellung von Formstoffen mit hochglänzenden Oberflächen.

## Beschreibung

Die vorliegende Erfindung betrifft eine härtbare, Wollastonit und ein Quarz/Kaolinit-Gemisch enthaltende Epoxidharzzusammensetzung, welche sich zur Herstellung von Formteilen mit hochglänzenden Oberflächen eignet.

Es ist bekannt, härtbaren Epoxidharzzusammensetzungen Füllstoffe zuzusetzen, um daraus Formstoffe mit verbesserten mechanischen Eigenschaften zu erhalten. Zur Herstellung von Formteilen mit hochglänzenden Eigenschaften aus Kunstharzmassen ist es wünschenswert, dass die Formteile neben einer hochglänzenden Oberfläche auch gute mechanische und gute thermische Eigenschaften aufweisen.

Zur Erhöhung des Oberflächenglanzes von Formteilen wurden Epoxidharze bisher lediglich in Form von Pulverbeschichtungen auf bestehende Oberflächen aufgetragen, die anschliessend metallbedampft wurden. Ein solches Verfahren ist beispielsweise in der EP-A-0 244 996 beschrieben.

Es wurde nun gefunden, dass man bei Verwendung von mit Wollastonit und einem Quarz/Kaolinit-Gemisch gefüllten, härtbaren Epoxidharzzusammensetzungen durch Härten Formstoffe oder Beschichtungen mit sowohl guten mechanischen Eigenschaften als auch mit hochglänzenden Oberflächen erhält, die direkt mit Metallen bedampft werden können.

Gegenstand vorliegender Erfindung ist somit eine härtbare Epoxidharzzusammensetzung, enthaltend
(a) ein Epoxidharz mit durchschnittlich mehr als einer Epoxidgruppe im Molekül,
(b) ein Epoxidharzhärtungsmittel in für die Aushärtung des Epoxidharzes ausreichender Menge,
(c) Wollastonit mit einer mittleren Korngrösse von kleiner als 100 µm in einer Menge von 10 bis 350 Gewichtsteilen, bezogen auf 100 Gewichtsteile der Summe aus den Komponenten (a) und (b),
(d) ein Quarz/Kaolinit-Gemisch mit einer mittleren Korngrösse von kleiner als 100 µm in einer Menge von 10 bis 350 Gewichtsteilen, bezogen auf 100 Gewichtsteile der Summe aus den Komponenten (a) und (b), wobei der Anteil an den Komponenten (c) und (d) zusammen nicht grösser als 360 Gewichtsteilen ist, und gegebenenfalls
(e) übliche Zusatzmittel.

Für die Herstellung der erfindungsgemässen Epoxidharzzusammensetzungen können als Epoxidharz (a) die in der Epoxidharztechnik üblichen Epoxidharze verwendet werden.

Beispiele für Epoxidharze sind:

I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
Es können aber auch cycloaliphatische Polycarbonsäuren eingesetzt werden, wie bei-spielsweise Tetrahydrophthalsäure, 4-Methyltetrahydrophthalsäure, Hexahydrophthalsäure oder 4-Methylhexahydrophthalsäure.
Weiterhin können aromatische Polycarbonsäuren Verwendung finden, wie beispielsweise Phthalsäure, Isophthalsäure oder Terephthalsäure.

II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.

Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan.
Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.

III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.

Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Bevorzugt verwendet man zur Herstellung der erfindungsgemässen Epoxidharzzusammensetzungen ein aromatisches Epoxidharz, das heisst, eine Epoxidverbindung, die im Molekül einen oder mehrere aromatische Ringe aufweist.

Insbesondere verwendet man zur Herstellung der erfindungsgemässen Epoxidharzzusammensetzungen ein Bisphenoldiglycidylether oder ein Epoxynovolakharz, besonders bevorzugt ein Epoxyphenol- oder ein Epoxykresolnovolakharz.

Als Epoxidharzhärtungsmittel (b) können für die erfindungsgemässen Epoxidharzzusammensetzungen die in der Epoxidharztechnik üblichen Härtungsmittel eingesetzt werden, wie beispielsweise Polycarbonsäuren und deren Anhydride, Dicyandiamid, Polyamine, Polyaminoamide, aminogruppenhaltige Addukte, aliphatische oder aromatische Polyole oder katalytisch wirkende Härtungsmittel.

Als Polycarbonsäuren für die Härtung der erfindungsgemässen Epoxidharzzusammensetzungen eignen sich zum Beispiel aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure, cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure sowie die Anhydride der genannten Polycarbonsäuren.

Als Polyamine können für die Härtung der oben genannten Epoxidharzzusammensetzungen aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3-Trimethylhexan-1,6-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harz, Bis-(4-aminophenyl)-sulfon, m-Xylylendiamin, Bis- (4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin.

Als Polyaminoamide für die Härtung der oben genannten Epoxidharzzusammensetzungen eignen sich beispielsweise die durch Umsetzung von Polycarbonsäuren, vorzugsweise von di- oder trimerisierten Fettsäuren, mit Polyaminen, vorzugsweise aliphatischen Polyaminen im molaren Überschuss erhaltenen Reaktionsprodukte wie sie beispielsweise im Handbook of Epoxy Resins, 1967, pages 10-2 bis 10-10 von H. Lee und K. Neville beschrieben werden.

Aminogruppenhaltige Addukte aus einem Amin und einer Polyepoxidverbindung als Härtungsmittel für Epoxidharze sind ebenfalls bekannt und können für die Härtung der oben genannten Epoxidharzzusammensetzungen eingesetzt werden und werden beispielsweise durch Umsetzung von Epoxidharzen mit Polyaminen im äquivalenten Überschuss erhaltenen. Solche aminogruppenhaltige Addukte werden beispielsweise in den US-Patenten 3,538,184; 4,330,659; 4,500,582 und 4,540,750 näher beschrieben.

Als aliphatische Polyole für die Härtung der oben genannten Epoxidharzzusammensetzungen eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die Härtung der oben genannten Epoxidharzzusammensetzungen beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol, oder durch Kondensation mit Bisphenolen, solche der oben genannten Art, eingesetzt werden.

Es können auch katalytisch wirkende Härtungsmittel zur Härtung der Epoxidharzzusammensetzungen verwendet werden, wie tertiäre Amine, beispielsweise 2,4,6-Tris-(dimethylaminoethyl)-phenol und andere Mannichbasen, N-Benzyldimethylamin und Triethanolamin; Alkalimetallalkoxide von Alkoholen, beispielsweise Na-alkoholat von 2,4-Dihydroxy-3-hydroxymethylpentan; Zinnsalze von Alkansäuren, beispielsweise Zinnoctanoat; Friedel-Crafts-Katalysatoren, beispielsweise Bortrifluorid und seine Komplexe und Chelate, die durch Umsetzung von Bortrifluorid mit zum Beispiel 1,3-Diketonen erhalten werden.

Vorzugsweise verwendet man als Härtungsmittel (b) für die erfindungsgemässen Epoxidharzzusammensetzungen ein phenolisches Epoxidharzhärtungsmittel.

Insbesondere setzt man als Härtungsmittel (b) ein Kresolnovolak ein.

Mit den Epoxidharzhärtungsmitteln können auch geeignete Härtungsbeschleuniger eingesetzt werden. Beispielsweise können bei Verwendung von Dicyandiamid, Polyaminoamiden, Polycarbonsäuren und deren Anhydriden als Beschleuniger tertiäre Amine oder deren Salze, quaternäre Ammoniumverbindungen oder Alkalimetallalkoxide verwendet werden.

Die Menge des eingesetzten Härtungsmittels richtet sich nach der chemischen Natur des Härtungsmittels und nach den gewünschten Eigenschaften der härtbaren Zusammensetzung und des gehärteten Produktes. Die maximale Menge kann leicht ermittelt werden. Wenn das Härtungsmittel ein Amin ist, werden normalerweise 0,75 bis 1,25 Äquivalente Aminwasserstoff pro 1 Epoxidäquivalent eingesetzt. Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei der Verwendung von Polyphenolen als Härtungsmittel setzt man 0,75 bis 1,25 phenolische Hydroxylgruppen pro 1 Epoxidäquivalent ein. Katalytisch wirkende Härtungsmittel werden allgemein in Mengen von 1 bis 40 Gewichtsteilen pro 100 Gewichtsteile Epoxidharz eingesetzt.

Der in den erfindungsgemässen Epoxidharzzusammensetzungen als Komponente (c) verwendete Wollastonit ist ein natürlich vorkommendes Calciumsilikat der Formel Ca₃[Si₃O₉] von nadelförmiger Gestalt mit Partikelgrössen im Mikronbereich. Auch der künstlich herstellbare Wollastonit weist nadelförmige Gestalt auf. Wollastonit ist im Handel erhältlich, beispielsweise unter der Bezeichnung Nyad® der Firma Nyco.

Vorzugsweise enthalten die erfindungsgemässen Epoxidharzzusammensetzungen Wollastonit mit einer mittleren Teilchengrösse von kleiner als 50 µm, insbesondere mit einer mittleren Teilchengrösse von kleiner als 5 µm.

Ferner enthalten die erfindungsgemässen Epoxidharzzusammensetzungen Wollastonit in einer Menge von 50 bis 200 Gewichtsteilen, bezogen auf 100 Gewichtsteile der Summe aus den Komponenten (a) und (b).

Das in den erfindungsgemässen Epoxidharzzusammensetzungen als Komponentze (d) zu verwendende Quarz/Kaolinit-Gemisch ist ebefalls bekannt und kann beispeilsweise durch einfaches Mischen von gemahlenem Quarz mit Kaolinit hergestellt werden. Kaolinit, ein Hauptbestandteil des Kaolins, ist im Handel als mikrokistallines Aluminiumsilikat erhältlich.

Vorzugsweise enthalten die erfindungsgemässen Epoxidharzzusammensetzungen ein Quarz/Kaolinit-Gemisch in einer Menge von 50 bis 200 Gewichtsteilen, bezogen auf 100 Gewichtsteile der Summe aus den Komponenten (a) und (b).

Ausserden enthalten die erfindungsgemässen Epoxidharzzusammensetzungen ein Quarz/Kaolinit-Gemisch, das vorzugsweise aus 5 bis 95 Gewichtsteilen Quarz und 95 bis 5 Gewichtseilen Kaolinit, insbesondere aus 20 bis 80 Gewichtsteilen Quarz und 80 bis 20 Gewichtseilen Kaolinit, besteht, bezogen aus 100 Gewichtsteile des Gemisches.

Das in den erfindungsgemässen Epoxidharzzusammensetzung enthaltene Quarz/Kaolinit-Gemisch weist vorzugsweise eine mittleren Teilchengrösse von kleiner als 50 µm, inbesondere kleiner als 5 µm, auf.

Als übliche Zusatzmittel (e) können die erfindungsgemässen Epoxidharzzusammensetzungen weitere übliche Füllstoffe, wie Glas- oder Metallpulver, Farbstoffe, Pigmente, wie Titandioxid, Verarbeitungshilfsmittel, wie Gleitmittel, Verlaufmittel, Thixotropiermittel, Stabilisatoren, Haftvermittler zwischen Füllstoffen und Harz, Härtungsbeschleuniger oder Formtrennmittel enthalten.

Bei Zusatz von weiteren üblichen Füllstoffen zu den erfindungsgemässen Epoxidharzzusammensetzungen machen die erfindungsgemäss zu verwendenden Füllstoffe (c) und (d) mindestens Zweidrittel, vorzugsweise mindestens Dreiviertel der Gesamtfüllstoffmenge aus.

Die erfindungsgemässen Epoxidharzzusammensetzungen werden nach an sich bekannten Methoden, wie mit Hilfe bekannter Mischaggregate, beispielsweise Rührer, Kneter, Walzen oder im Falle fester Substanzen in Trockenmischern, hergestellt.

Die Härtung der erfindungsgemässen Epoxidharzzusammensetzungen zu Formkörpern, Beschichtungen oder dergleichen erfolgt in für die Epoxidharztechnik üblicher Weise durch Erhitzen, wie sie beispielsweise im "Handbook of Epoxy Resins", 1967, von H. Lee und K.Neville beschrieben wird. Im allgemeinen liegt die Härtungstemperatur zwischen 50 und 200°C.

Die erfindungsgemässen Epoxidharzzusammensetzungen eignen sich beispielsweise als Giessharze, Laminierharze, Klebstoffe, Pressmassen, Beschichtungsmassen sowie als Umhüllungssysteme für elektrische und elektronische Bauteile, vorzugsweise zur Herstellung von Formkörpern oder Beschichtungen mit glänzenden Oberflächen, wie beispielsweise Scheinwerfern. Die aus den erfindungsgemässen Epoxidharzzusammensetzungen hergestellten Formkörper weisen glatte Oberflächen auf, so dass sie aufgrund der guten Oberflächenbeschaffenheit direkt mit einer Metallschicht, beispielsweise durch Aufdampfen von Aluminium, versehen werden können.

Gegenstand vorliegender Erfindung ist daher auch die Verwendung der erfindungsgemässen Epoxidharzzusammensetzung zur Herstellung von Formstoffen mit hochglänzenden Oberflächen.

Die aus den erfindungsgemässen Epoxidharzzusammensetzungen hergestellten Formstoffe oder Beschichtungen zeichnen sich ausserdem durch eine hohe Temperaturbeständigkeit aus. Beispielsweise können diese über eine längere Zeitdauer bis etwa 240°C oder sogar auf höhere Temperaturen erhitzt werden, ohne dass Verzugserscheinungenan den Formstoffen oder Beschichtungen auftreten. Die aus den erfindungsgemässen Epoxidharzzusammensetzungen hergestellten Formstoffe oder Beschichtungen weisen also bei der Erwärmung innerhalb des Formteils eine geringe Dehnungsdifferenz auf. Vorteilhaft bei den aus den erfindungsgemässen Epoxidharzzusammensetzungen hergestellten Formstoffen ist auch das geringe Auftreten von Ausgaserscheinungen bei erhöhten Temperatur, beispielsweise bis etwa 240°C oder auch bei höheren Temperaturen.

### Beispiel

20,73 g eines festen, gemahlenen Epoxidkresolnovolakharzes mit einem Epoxidgehalt von 4,0-4,4 Äquivalenten/kg; 10,07 g eines Phenolnovolaks mit einem Hydroxylgehalt von 8,0-9,0 Äquivalenten/kg, erhältlich von der Firma Occidental Chem., Belgien, unter der Handelsbezeichnung Durex®33009; 35,26 g Wollastonit mit einer mittleren Korngrösse von 2,8 µm, erhältlich von der Firma Nyco, USA, unter der Handelsbezeichnung Nyad®1250; 30,22 g eines Quarz/Kaolinit-Gemisches mit einer mittleren Korngrösse von 1,8 µm, erhältlich von der Firma Hoffmann & Söhne, Deutschland, unter der Hansdelsbezeichnung Aktisil®EM; 0,4 g 2-Ethylimidazol; 0,2 g γ-Glycidyloxypropyltrimethoxysilan (Silan A-187 der Firma Union Carbide); 0,4 g Russ (Elftex 460); 0,8 g OP-Wachs der Firma Hoechst und 0,5 g Ca-Stearat werden auf einem Buss-Cokneter PR 46 bei einer Temperatur von 70-90°C compoundiert und zu einem Granulat vermahlen. Vom Granulat werden ISO-Schulterstäbe für die physikalischen Prüfungen sowie in einem hochglanzpolierten und verchromten Werkzeug Prüfplatten der Abmessungen 50x40 mm für die Messung des Glanzgrades hergestellt. Die Verarbeitungsbedingungen dabei sind:
Spritzgiessmaschine Bucher TS 120, Zylindertemperatur = 80/60°C, Werkzeugtemperatur = 180/180°C und Härtungszeit = 50 Sekunden.
An den erhaltenen Formkörpern werden folgende Eigenschaften gemessen:

| | |
|---|---|
| Schlagzähigkeit (ISO 179, Verfahren 1eU) | = 5,0 kJ/m² |
| Wärmeformbeständigkeit (ISO 75, Methode A) | = 175°C |
| Glanzgrad (Reflexionswert nach DIN 67530) | = 82%. |

## Patentansprüche

1. Härtbare Epoxidharzzusammensetzung, enthaltend
(a) ein Epoxidharz mit durchschnittlich mehr als einer Epoxidgruppe im Molekül,
(b) ein Epoxidharzhärtungsmittel in für die Aushärtung des Epoxidharzes ausreichender Menge,
(c) Wollastonit mit einer mittleren Korngrösse von kleiner als 100 µm in einer Menge von 10 bis 350 Gewichtsteilen, bezogen auf 100 Gewichtsteile der Summe aus den Komponenten (a) und (b),
(d) ein Quarz/Kaolinit-Gemisch mit einer mittleren Korngrösse von kleiner als 100 µm in einer Menge von 10 bis 350 Gewichtsteilen, bezogen auf 100 Gewichtsteile der Summe aus den Komponenten (a) und (b), wobei der Anteil an den Komponenten (c) und (d) zusammen nicht grösser als 360 Gewichtsteilen ist, und gegebenenfalls
(e) übliche Zusatzmittel.

2. Epoxidharzzusammensetzung gemäss Anspruch 1, dadurch gekennzeichnet, dass sie als Komponente (a) ein aromatisches Epoxidharz enthält.

3. Epoxidharzzusammensetzung gemäss Anspruch 1, dadurch gekennzeichnet, dass sie als Komponente (a) einen Bisphenoldiglycidylether oder ein Epoxynovolakharz enthält.

4. Epoxidharzzusammensetzung gemäss Anspruch 1, dadurch gekennzeichnet, dass sie als Komponente (a) ein Epoxyphenol- oder ein Epoxykresolnovolakharz enthält.

5. Epoxidharzzusammensetzung gemäss Anspruch 1, dadurch gekennzeichnet, dass sie als Komponente (b) ein phenolisches Epoxidharzhärtungsmittel enthält.

6. Epoxidharzzusammensetzung gemäss Anspruch 1, dadurch gekennzeichnet, dass sie als Komponente (b) ein Kresolnovolak enthält.

7. Epoxidharzzusammensetzung gemäss Anspruch 1, dadurch gekennzeichnet, dass sie Wollastonit in einer Menge von 50 bis 200 Gewichtsteilen enthält.

8. Epoxidharzzusammensetzung gemäss Anspruch 1, dadurch gekennzeichnet, dass sie Wollastonit mit einer mittleren Teilchengrösse von kleiner als 50 µm enthält.

9. Epoxidharzzusammensetzung gemäss Anspruch 1, dadurch gekennzeichnet, dass sie Wollastonit mit einer mittleren Teilchengrösse von kleiner als 5 µm enthält.

10. Epoxidharzzusammensetzung gemäss Anspruch 1, dadurch gekennzeichnet, dass sie ein Quarz/Kaolinit-Gemisch in einer Menge von 50 bis 200 Gewichtsteilen enthält.

11. Epoxidharzzusammensetzung gemäss Anspruch 1, dadurch gekennzeichnet, dass sie ein Quarz/Kaolinit-Gemisch enthält, das aus 5 bis 95 Gewichtsteilen Quarz und 95 bis 5 Gewichtseilen Kaolinit besteht, bezogen aus 100 Gewichtsteile des Gemisches.

12. Epoxidharzzusammensetzung gemäss Anspruch 11, dadurch gekennzeichnet, dass sie ein Quarz/Kaolinit-Gemisch enthält, das aus 20 bis 80 Gewichtsteilen Quarz und 80 bis 20 Gewichtseilen Kaolinit besteht, bezogen auf 100 Gewichtsteile des Gemisches.

13. Epoxidharzzusammensetzungen gemäss Anspruch 11, dadurch gekennzeichnet, dass sie ein Quarz/Kaolinit-Gemisch mit einer mittleren Teilchengrösse von kleiner als 50 µm enthält.

14. Verwendung der Epoxidharzzusammensetzung gemäss Anspruch 1 zur Herstellung von Formstoffen mit hochglänzenden Oberflächen.
